# EUROPÄISCHE PATENTSCHRIFT

(11) **EP 1 706 773 B1**
(45) Veröffentlichungstag und Bekanntmachung des Hinweises auf die Patenterteilung: **25.08.2010**
(21) Anmeldenummer: 04820035.6
(22) Anmeldetag: 22.11.2004
(51) Int. Cl.: G02B 23/12, G02B 5/20, H04N 5/33, B60R 1/00, G01S 17/93

(54) **NACHTSICHTSYSTEM FÜR KRAFTFAHRZEUGE MIT PARTIELLEM OPTISCHEM FILTER**
NIGHT VISION SYSTEM FOR MOTOR VEHICLES, COMPRISING A PARTIAL OPTICAL FILTER
SYSTEME DE VISION NOCTURNE A FILTRE OPTIQUE PARTIEL POUR DES VEHICULES AUTOMOBILES

(30) Priorität: 10.01.2004 DE 102004001556
(43) Veröffentlichungstag der Anmeldung: 04.10.2006
(73) Patentinhaber: ROBERT BOSCH GMBH, 70442 Stuttgart (DE)
(72) Erfinder: HAUG, Karsten, 70372 Stuttgart (DE)
(86) Internationale Anmeldenummer: PCT/EP2004/053035
(87) Internationale Veröffentlichungsnummer: WO 2005/066684

(56) Entgegenhaltungen:
- EP-A- 1 465 002
- DE-A1- 4 107 850
- DE-A1- 4 137 551
- FR-A- 2 732 849
- US-A- 3 704 375

## Beschreibung

Die Erfindung geht aus von einem Nachtsichtsystem für Kraftfahrzeuge, das eine Kamera mit einer strahlungsempfindlichen Bildsensorfläche enthält, eingerichtet zum Erfassen von elektromagnetischer Strahlung insbesondere aus dem nahen Infrarotbereich.

Dazu gehören vor allem Nachtsichtsysteme, die die Sicht des Fahrers bei nicht eingeschaltetem konventionellem Fernlicht verbessern.

Systeme zur Nachtsichtunterstützung halten vermehrt Einzug in Kraftfahrzeuge. Nachtsichtsysteme haben zum Ziel, die Sicht des Fahrers über den Abblendlichtbereich hinaus durch Einsatz von Kameras und Displays oder Windschutzscheibenprojektionen bei Nacht zu verbessern. Dabei soll der Gegenverkehr nicht geblendet werden, wie es beim konventionellen Fernlicht, das auch Licht im sichtbaren Bereich aufweist, der Fall wäre.
Nachtsichtunterstützung wird durch den Einsatz und die Erfassung von Wellenlängenbereichen erreicht, die für das menschliche Auge nicht sichtbar sind. Diese werden über Kameras mittels Displays oder Windschutzscheibenprojektionen (z.B. durch Head-up-Displays) dem Fahrer zugänglich gemacht.

Konventionelle Halogcnscheinwerfer (Fern- und Abblendlicht) enthalten sowohl spektrale Anteile im sichtbaren Bereich (VIS, 380nm - 780nm, vgl. DIN5030 Teil2) als auch im nahen Infrarot (NTR IR-A, 780nm - 1400nm). NTR-Fernscheinwerfer aktueller Bauart verwenden konventionelle Halogenglühlampen und blenden mittels optischen Filtern den sichtbaren Bereich aus. Zukünftig werden auch auf Lasern oder LEDs basierende NIR-Fernscheinwerfer verfügbar sein. Videokameras auf Basis von CCD- oder CMOS-Technologie weisen eine spektrale Empfindlichkeit auf, die von etwas 380nm bis ca. 1100nm reicht. Vom NIR-IR-A-Bereich wird also nur der Bereich zwischen 780nm und 1100nm genutzt. Dieser wird im folgenden als NIR-Bereich bezeichnet.

Aus DE 41 07 850 A1 ist eine Anordnung zur Verbesserung der Sicht, insbesondere in Fahr-zeugen, bekannt. Dabei werden unterschiedliche Polarisationseigenschaften von Nutzsigha-len und Störsignalen im reflektierten Licht einer Infrarot-Beleuchtungsoptik im Fahrzeug aus-genutzt. Die Beleuchtungsoptik weist einen Halbleiterlaser und eine Kamera auf. Vor der Optik der Kamera ist ein Polarisationsfilter angebracht, dessen Durchlassrichtung senkrecht zur Richtung des emitierten Laserlichts steht. Das Polarisationsfilter sperrt somit den Durch-gang des eigenen imitierten Lichts und des Lichts entgegenkommender Fahrzeuge gleicher Polarisation. Weiterhin ist vor der Optik der Kamera ein spektrales Linienfilter angeordnet, das für das eigene Laserlicht durchlässig ist, jedoch eine hohe Sperrung für das restliche sichtbare und infrarote Spektrum aufweist, also sowohl das Tageslicht als auch das normale Scheinwerferlicht der entgegen kommenden Fahrzeuge stark dämpft.

Zusätzlich kann zur weiteren Reduzierung von Störlicht auch ein nicht gezeigtes räumliches Absorptionsfilter vor der Kamera angebracht werden, das zum Beispiel die unteren Bereiche des Bildes schwächt und damit den heller ausgeleuchteten Vordergrund schwächt, zuguns-ten des weniger ausgeleuchteten Hintergrunds. Eine weitere Alternative dazu stellt ein spati-aler Lichtmodulator vor der Kamera dar, der dann gezielt nur die zu hellen Partien des Bildes im Kamerasystem schwächt.

Aus DE 4137 551 A1 ist eine weitere Anordnung zur Verbesserung der Sicht vorgesehen. Die Anordnung weist eine Beleuchtungsoptik und eine Empfangsoptik mit der Möglichkeit der Entfernungstrennung einfallenden Lichts auf, wobei die Abnahme der Intensität des beleuch-teten Lichts durch entfernungsabhängige Maßnahmen in der Aufnahmeoptik kompensiert wird.

Aus FR 2732849 A1 ist eine Infrarotkamera für ein Fahrzeug bekannt, das ein Filter aufweist, wobei das Filter aus Teilbereichen des Bildes Infrarotlicht herausfiltert.

Aus EP 1465 002 A1 ist eine Vorrichtung zur Verbesserung der Sicht in einem Kraftfahrzeug bekannt. Die Vorrichtung weist eine Strahlungsquelle mit infraroter Strahlung und eine infra-rotempfindliche Kamera auf. Weiterhin ist ein Filter vorgesehen, das Bereiche unterschiedli-cher Transmissionseigenschaften aufweist. Das Filter weist dabei wenigstens einen Bereich mit einem Transmissionsgrad von etwa 70% für sichtbares Licht oder Teile davon auf. Wei-terhin ist bevorzugt wenigstens ein zweiter Bereich mit einem Transmissionsgrad von etwa oder 10-5 für sichtbares Licht vorgesehen. Durch diese Ausbildung der Vorrichtung gelingt es, eine sichere Erfassung der Fahrzeugumgebung zu ermöglichen und dadurch den Straßenverkehr sicherer zu gestalten.

Aus US 3,704,375 ist ein monolithisch aufgebauter Fotodetektor bekannt.

In verschiedenen bekannten Nachtsichtsystemen wird der nicht sichtbare Nahinfrarotbereich (NIR-Bereich) mit Wellenlängen von 780 bis ca. 1100 nm verwendet. Bei diesen NIR-basierten sogenannten aktiven Systemen (im Gegensatz zu auf Wärmestrahlung des fernen Infrarot basierenden Systemen) wird der von NIR-Fernscheinwerfern des Kraftfahrzeugs ausgeleuchtete Bereiche als Nahinfrarotbild zur Nachtsichtunterstützung des Fahrers mit einer Videokamera erfasst und mittels Display (konventionell oder Head-up-Display) für den Fahrer visualisiert.

Bei reinen NIR-Systemen (ohne Nutzung des VIS- Bereichs) wird von der Kamera lediglich das Bild aus dem NIR-Bereich von 780nm - ca. 1100nm aufgenommen und für den Fahrer auf einem Display oder Head-up-Display sichtbar gemacht. In Kunihiko Toyofuku et al.: "The "Night View System" using Near-Infrared Night", in SAE 2003-01-0018, S.33 - S.38, wird ein solches System offenbart. Dort unterdrückt ein Blockfilter im Strahlengang vor dem Bildsensor (Imager) komplett die Aufnahme des sichtbaren Bereichs (VIS-Bereich), also die Wellenlängen von 380 bis 780 nm. Damit werden jedoch bei den für die Nachtsichtunterstützung relevanten Bildbereichen mögliche Verbesserungen der Bildqualität durch Strahlung aus dem sichtbaren (VIS) Bereich verhindert und dem Fahrer sicherheitsrelevante Informationen vorausfahrender Fahrzeuge wie z.B. LED-basierte Bremsleuchten vorenthalten, die nur im sichtbaren Bereich verfügbar sind.

Des Weiteren sind gemischte NIR-VIS-Systeme bekannt.
Dabei wird sowohl Strahlung aus dem NIR- als auch aus dem VIS-Bereich erfasst, und das Bild auf einem Display visualisiert. Die dafür verwendete Kamera ist in einem Wellenlängenbereich von ca. λ_unten bis λ_oben sensitiv, wobei λ_unten im sichtbaren Bereich zwischen 380nm und 780nm und λ_oben zwischen 780nm und 1100nm im NIR-Bereich liegt.

Ein Problem bei reinen NIR-Systemen und insbesondere bei den kombinierten NIR-VIS-Systemen ist die ungleichmäßige Ausleuchtung des mit der Kamera erfassten Bereichs. Für die Verbesserung der Sicht bei Nacht ist hauptsächlich die Visualisierung des Sichtfeldes über den Abblendlichtbereich hinaus interessant. Der Abblendlichtbereich (im folgenden als Nahbereich bezeichnet) ist durch das Abblendlicht bereits hinreichend ausgeleuchtet und daher von untergeordneter Bedeutung, wird aber trotzdem (zumindest teilweise) dargestellt, um dem Fahrer die Orientierung bei der Betrachtung des Nachtsichtbildes zu erleichtern. Helle Ausleuchtung des Kamerabildes für diesen Bereich tritt auf, weil sich das konventionelle Abblendlicht und das NIR-Fernlicht ergänzen. Außerdem werden nahe Bereiche prinzipbedingt stärker ausgeleuchtet und heller abgebildet als entfernt liegendere Zonen.
Ein Teil der begrenzten Helligkeits-Dynamik der Kamera und des Displays wird dadurch aufgrund des hellen Nahbereichs "verschenkt", so dass z.B. dunkle Bereiche jenseits des Nahbereichs (im folgenden als Fernbereich bezeichnet) nicht mehr so gut aufgelöst werden können.
Außerdem wird die Aufmerksamkeit des Fahrers verstärkt auf den hellen Nahbereich gelenkt, so dass die Wahrnehmung von kritischen Details im Fernbereich erschwert wird.

Eine von Software-Algorithmen in der Bildverarbeitung (bei rein darstellenden Systemen auch als Bildbearbeitung bezeichnet) rechnerisch durchgeführte Abdunklung von unerwünscht hellen Bereichen erfordert großen Rechenaufwand und zusätzlichen Speicherplatz, was die Kosten für das entsprechend ausgerüstete Nachtsichtsteuergerät erhöht.
Bei einfachen Nachtsichtsystemen, die keinen Bildverarbeitungsrechner enthalten, ist eine solche softwaregestützte Nachbearbeitung des Kamerabildes nicht möglich.
Auch können durch eine softwaregestützte Nachbearbeitung Übersteuerungen des Imagers aufgrund begrenzter Helligkeits-Dynamik nicht mehr korrigiert werden. Außerdem ist eine wellenlängenabhängige Abschwächung des Nahbereichs über Software-Algorithmen bei Grauwertkameras nicht möglich, bei Farbkameras nur mit großem Aufwand.

### Vorteile der Erfindung

Mit den Maßnahmen des unabhängigen Anspruchs 1 wird erreicht, dass ohne die Zuhilfenahme von bildverarbeitenden Software-Algorithmen eine Abschwächung der erfassten Strahlung auf vorbestimmten Teilbereichen der Bildsensorfläche der Kamera des Nachtsichtssystems erfolgt, auf die regelmäßig sonst unerwünscht hohe Strahlungsintensität entfallen würde. Dadurch, dass die Abschwächung der Strahlung erfindungsgemäß in vorbestimmten Teilbereichen durch ein entsprechend in dem Strahlengang des Nachtsichtsystems angeordnetes optisches Filterelement bewirkt wird, ist die Strahlung bereits vor der Erfassung in der Bildsensorfläche in den gewünschten Bildbereichen, wie insbesondere dem Abbild des zu hellen Nahbereichs, reduziert. Der Strahlengang wird für den Zweck der vorliegenden Erfindung verstanden als der Weg vom beleuchteten Objekt zum Imager, wobei, für die vorliegende Erfindung sich die geeigneten Positionen des Filterelements bevorzugt in dem Abschnitt unmittelbar vor und/oder innerhalb der Kamera befinden.

Kostenintensive Software-Algorithmen zur Bildnachbereitung sind dann für die Abdunklung von Bildbereichen, die rogelmäßig unerwünscht hell wären, entbehrlich. Die Sicht des Fahrers wird auf unkomplizierte Weise mehr auf die für die Nachtsichtunterstützung interessanten Bildausschnitte gelenkt. Eine Übersteuerung von Teilbereichen der Bildsensorfläche wird vermieden und die verfügbare Helligkeitsdynamik von Kamera und Display bezüglich der für die Nachtsichtunterstützung relevanten Bildbereiche besser ausgenutzt.

Das erfindungsgemäße System ist in Anspruch 1 definiert und enthält eine Kamera, die in einem Wellenlängenbereich von 380 bis 1100 nm sensitiv ist. Dabei wird Strahlung sowohl aus dem VIS- als auch aus dem NIR-Bereich erfasst, was die Qualität der Nachtsichtuntorstützung erhöht (z.B. auch LFD-Brems- und Rückleuchten sichtbar) .

Das erfindungsgemäße Das erfindungsgemäße Nachtsichtsystem weist die filterbedingte Abschwächung der Strahlung zumindest des Teils der Bildsensorfläche, auf den der Nahbereich aus Fahrersicht abgebildet wird, auf. Es handelt sich dabei um dem Bereich ummittelbar vor dem Kraftfahrzeug, der aus Sicht des Fahrers mittels Abblendlicht bereits ausreichend einsehbar ist. Die hohe Helligkeit, hervorgerufen insbesondere durch Kombination von Abblendlicht und NIR-Fernlicht, wird so in diesem für die Nachtsichtunterstützung uninteressanten Bereich erfindungsgemäß abgeschwächt, was eine Verbesserung der Nachtsicht über den Abblendlichtbereich hinaus zur Folge hat. Die Aufmerksamkeit des Fahrers wird nicht durch große Helligkeit im Nahbereich abgelenkt. Außerdem wird der Dynamikbereich der Kamera besser ausgenutzt, so dass dunkle Bildbereiche (insbesondere im Fernbereich) höher aufgelöst wenden können.

In den Unteransprüchen sind vorteilhafte Ausgestaltungen Weiterbildungen und Verbesserungen des jeweiligen Gegenstandes der Erfindung angegeben.

Eine vorteilhafte Weiterbildung ist eine wellenlängenabhägige Filtercharakteristik des optischen Filters, wobei diese eine individuell auf die spezielle Verwendung des Systems angepasste Durchlassfunktion aufweist. So kann beispielsweise die Wellenlängencharakteristik des Bildsensors in des Kamera und/oder der Scheinwerfer durch eine inverse Wellenlängencharakteristik des optischen Filters berücksichtigt werden, wodurch über einen großen Wellenlängenbereich hinweg eine homogene spektrale Empfindlichkeit des Gesamtsystems erreicht wird.

Durch die Wahl unterschiedlicher spektraler Bereiche von Abblendlicht und NIR-Fernlicht, kann eine Abschwächung des Abblendlichts stark vereinfacht werden. Wählt man die Spektren von NIR-Fernlicht und konventionellem Abblendlicht so, dass sie nicht überlappen (z.B. durch Blockung des NIR-Anteils mittels optischem Filter im Abblendlicht-Scheinwerfer), dann ist eine vollständige Unterdrückung des Abblendlichtanteils im NV-Bild möglich (spektrale Separierung) .
Besonders vorteilhaft ist eine Blockung aller spektraler Anteile über ca. 600nm, im Abblendlichtspektrum, da dann die Nachtsicht-Kamera so ausgelegt werden kann (Durchlaßbereich von 600mn bis 1100nm), das trotz Abblendlichtunterdrückung noch LED-Rück- oder Bremsleuchten mit einer Wellenlänge von z.B. 625nm erfaßt werden können. Bei der Auslegung der wollenlängenabhängigen Filtercharakteristik kann das spektrale Reflexionsverhalten der Straße (z.B. von Asphalt) mitberücksichtigt werden.

Eine zusätzliche Verbesserung stellt die Auswechselbarkeit des optischen Filters dar. Dies ermöglicht eine einfache Anpassung an unterschiedliche Fahrzeugtypen oder - varianten. Auch Nachrüstsysteme können damit einfach an verschiedene Fahrzeugtypen angepaßt werden.

Besonders geeignet zur effektiven Abschwächung von Strahlung aus einem bestimmten Objektbereich wie z.B. dem Nahbereich ist die Positionierung des Filters direkt vor der Bildsensorfläche. Ein optischer Filter als Beschichtung auf der Bildsensorfläche ist dabei eine vorteilhafte Variante, denn eine Befestigungseinrichtung für den Filter entfällt dadurch. Alternativ kann das Filter als Beschichtung auf einem Abdeckglas für den Bildsensor (Glas-Lid) angebracht sein, das den eigentlichen Bildsensor und seine Bonddrähte vor Beschädigung schützt. Alternativ kann das Lid selbst als optisches Filter ausgeprägt sein. Günstig kann auch eine Integration des Filters ins Objektiv sein. Hier bietet sich insbesondere die Beschichtung der letzten, dem Imager zugewandten Linse an.

### Zeichnungen

Anhand der Zeichnungen werden Ausführungsbeispiele der Erfindung erläutert.

Es zeigen
- Fig. 1: ein Blockschaltbild einer Ausführungsform des erfin- dungsgemäßen Nachtsichtsystems für Kraftfahrzeu- ge;
- Fig. 2: eine Skizze eines Querschnitts einer Kamera mit im Strahlengang eines Nachtsichtsystems erfindungs- gemäß angeordnetem Filterelement zur Abschwächung erfasster Strahlung aus dem Nahbereich;
- Fig. 3: ein Diagramm zur Darstellung einer wellenlängenab- hängigen Durchlasscharakteristik eines Beispiels für ein erfindungsgemäß im Strahlengang eines Nachtsichtsystems verwendbares Filterelement.
- Fig. 4: eine Skizze einer Ausführungsform einer Bildsensor- fläche mit einer erfindungsgemäßen als Filter wirksamen Beschichtung, eingerichtet zur Verwen- dung in einem Nachtsichtsystem für Kraftfahrzeu- ge;
- Fig. 5: eine skizzenhafte Darstellung der örtlichen Intensi- tätsverteilung des Abblendlichts zur Veranschau- lichung einer möglichst inversen, örtlichen Cha- rakteristik einer Ausführungsform eines optischen Filters zur Abschwächung des Nahbereichs, einge- richtet zur Verwendung in einem Nachtsichtsystem für Kraftfahrzeuge.;

### Beschreibung von Ausführungsbeispielen

In den Figuren bezeichnen gleiche Bezugszeichen gleiche oder funktionsgleiche Komponenten.

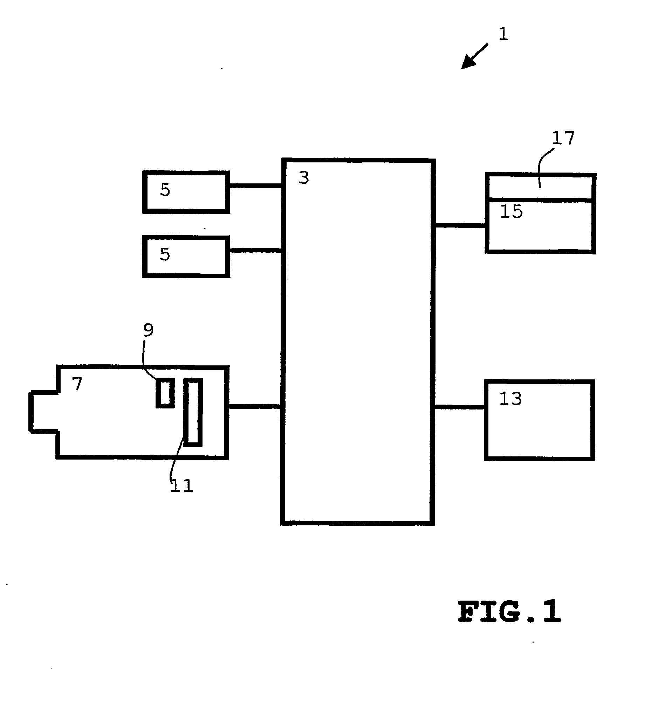

**Figur 1** zeigt ein Blockschaltbild einer Ausführungsform des erfindungsgemäßen Nachtsichtsystems 1 für Kraftfahrzeuge. Das Nachtsichtsystem 1 verfügt über eine Kontrolleinheit 3, die mit den weiteren Komponenten des Systems verbunden ist, diese steuert und deren Signale und Daten verarbeitet.

Nach Aktivierung des Nachtsichtsystems durch eine Bedieneinheit 13, schaltet die Kontrolleinheit 3 die NIR-Fernlichtscheinwerfer 5 ein. Diese Scheinwerfer 5 leuchten im NIR-Wellenlängenbereich ( 780 bis ca. 1100nm) einen ähnlichen räumlichen Bereich wie bei konventionellem Fernlicht vor dem Kraftfahrzeug aus. Die Reichweite beträgt ungefähr 250 Meter.

Eine auch für den NIR-Bereich sensitive Kamera 7 mit CCD- oder CMOS-Bildsensor (jeweils mit linearer oder nichtlinearer Intensitätskennlinie) mit einem Schärftentiefenbereich von ca. 2m bis unendlich erfasst unter anderem die von Objekten, die sich im NIR-Fernlichtbereich befinden, reflektierte NIR-Strahlung. Erfindungsgemäß ist die Kamera 7 mit einem in dem Strahlengang des Nachtsichtsystems 1 angeordneten optischen Filterelement 9 ausgestattet, mit dem die Strahlung auf einem vorbestimmten Teilbereich der Bildsensorfläche 11 in der Kamera 7 abgeschwächt wird. Die Bildsensorfläche ist beispielsweise ein CCD- oder CMOS-Chip

Die von der Kamera 7 erfassten Bilddaten werden über die Kontrolleinheit 3 an eine Darstellungseinheit 15 übermittelt. In der Darstellungseinheit 15 wird das Bild der Kamera auf einem Display 17 für den Fahrer visualisiert. Das Display 17 ist beispielsweise ein sogenanntes "head-up display", mit dem das visualisierte Bild der Kamera für den Fahrer gut sichtbar auf einen unteren Teil der Windschutzscheibe geworfen wird.

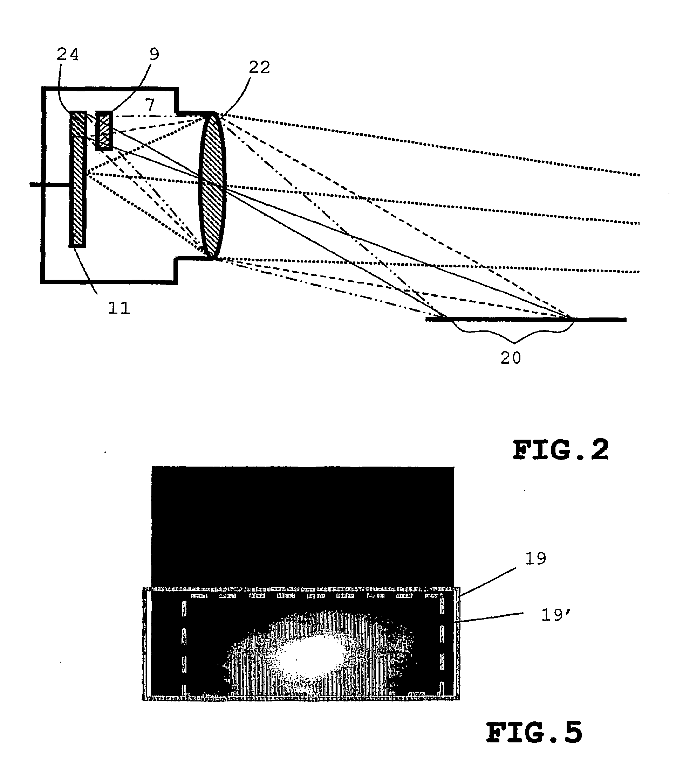

In **Figur 2** ist ein Querschnitt einer Kamera 7 mit im Strahlengang eines Nachtsichtsystems erfindungsgemäß angeordneten Filterelement 9 zur Abschwächung erfasster Strahlung aus dem Nahbereich 20 schematisch skizziert. In der in **Figur 2** dargestellten Ausführungsform befindet sich ein solches Filterelement 9 unmittelbar vor dem Teilbereich des Bildsensors, auf den der Nahbereich abgebildet wird. Die gestrichelten Linien stellen die Randstrahlen des Strahlenbündels ausgehend vom vorderen und hinteren Ende des Nahbereichs 20 dar. Die Position des Filterelements wird so gewählt, dass alle vom Nahbereich auf die Bildsensorfläche fallenden Strahlen durch das Filterelement 9 gehen. Die durchgezogenen Linien stellen den Hauptpunktstrahl des vorderen, bzw. hinteren Randpunkts des Nahbereichs dar. Die gepunkteten Linien bilden einen bestimmten, willkürlich gewählten Punkt aus dem Fernbereich ab, der, wie aus der Zeichnung ersichtlich, nicht durch das Filterelement 9 abgeschwächt wird.

Wie der Fachmann erkennen wird, ist das Filterelement 9 möglichst nahe an der Bildsensorfläche 11 zu haben, um eine möglichst scharfe Grenze zwischen Nahbereichsabbildung und Fernbereichsabbildung mit möglichst geringem Überlapp zu haben, damit möglichst wenige Strahlen von Bildpunkten aus dem Fernbereich gefiltert abgebildet werden, und möglichst viele Strahlen aus dem Nahbereich 20 durch das Filter 9 gefiltert werden.

Dabei wird die aus dem Nahbereich 20 von der Kamera 7 erfasste Strahlung über das Kameraobjektiv 22, das zusammengefasst als eine Linse dargestellt ist, auf einen oberen Bereich der Bildsensorfläche 11, den sogenannten Nahbereichs-Bildbereich 24 projiziert. Direkt vor diesem Nahbereichs-Bildbereich 24 ist erfindungsgemäß das Filterelement 9 angeordnet.
Das Filterelement 9 kann aus dem Material/den Schichten eines handelsüblichen Interferenzfilters oder Absorptionsfilters bestehen. Dieser Filter 9 schwächt die Strahlung aus dem Nahbereich 20 nach seiner Wellenlängencharakteristik ab. Auf den übrigen Teil der Bildsensorfläche 11 trifft die ungefilterte Strahlung, die vom Fernbereich kommt. Beispielsweise ist ein Filter, dessen Abschwächung der Strahlung die inverse ortsabhängige Charakteristik der Abbildung des Abblendlichts des Kraftfahrzeugs aufweist, vor der Bildsensorfläche 11 angebracht. Es sind auch andere Filterelemente, die einen über den reinen Nahbereich hinausreichenden Bereich abdecken, möglich. Diese weisen beispielsweise eine ortsabhängige Filtercharakteristik auf, die sich an der Gesamt-Intensität der von der Kamera 7 erfassten Strahlung orientieren und damit nicht nur eine Überstrahlung des Nahbereichs korrigieren, sondern zusätzlich auch Inhomogenitäten im Fernbereich durch eine inverse Charakteristik kompensieren. So kann eine homogene Intensität des gesamten Sichtbereichs der Kamera erzielt werden, so daß beispielsweise die Vignettierung kompensiert wird. Der Filter 9 bzw. die Filterbechichtung kann dann die gesamte Imagerfläche oder aber nur Teile davon beeinflussen.

Der Filter 9 kann auch eine wellenlängenabhängige Durchlasscharakteristik aufweisen. Außerdem ist eine Kombination von ortsabhängiger und wellenlängenabhängiger Charakteristik möglich.

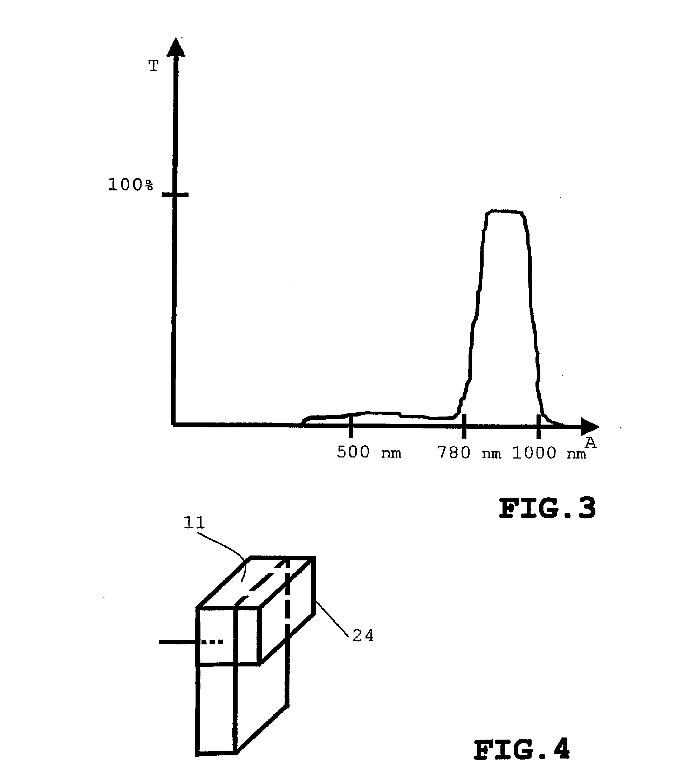

In **Figur 3** ist in Diagrammform ein Beispiel für eine solche wellenlängenabhängige Durchlass- bzw. Transmissionscharakteristik des Filters dargestellt.

Die Transmissionsrate T ist eine Funktion über der Wellenlänge A. Die Abschwächung für den sichtbaren Bereich (380-780nm) ist mit ca. 90% sehr stark. Hingegen beträgt die Unterdrückung der Strahlung im NIR-Bereich (780-1100nm) nur ca. 4%. Eine Kombination der ortsabhängigen Charakteristik mit einer wellenlängenspezifischen Durchlaßcharakteristik erzielt eine ebenfalls starke Abschwächung der NIR-Strahlung aus dem Nahbereich und einen für den übrigen Bildsensorflächenbereich gleich guten Durchlass von VIS- und NIR-Strahlung.

In **Figur 4** ist eine Ausführungsform einer erfindungsgemäß mit einem optischen Filter beschichteten Bildsensorfläche 11 eingerichtet zur Verwendung in einem Nachtsichtsystem für Kraftfahrzeuge skizziert. Die Bildsensorfläche 11 weist eine Beschichtung auf, die ortsabhängig nur für einen Teilbereich 24 der Bildsensoroberfläche die dort auftreffende Strahlung abschwächt. Die Beschichtung 24 besteht aus einem geeigneten Material, wie es weiter oben erwähnt wurde. Die Filterwirkung kann dabei neben einer stets vorhandenen wellenlängenabhängigen Charakteristik eine ortsabhängige Charakteristik aufweisen, die beispielsweise durch Aufbringen unterschiedlicher Beschichtungen an verschiedenen Orten erzielt wird.

Mit Bezug zu der örtlichen Filtercharakteristik gibt Fig. 5 die örtliche Intensitätsverteilung des Abblendlichts aus Sicht der Kamera wieder. Die grau gezeichneten Boxen 19 und 19' kennzeichnen in etwa den Nahbereich und damit die Lage und Größe des (invers anzubringenden) optischen Filters 9. Es ist gut zu erkennen, daß der Filter nicht zwingend die gesamte Breite des Bildsensors einnehmen muss.
Da der Filter 9 (in Fig. 5 nicht abgebildet) eine inverse Charakteristik der Intensität aufweisen sollte um ein möglichst gleichmäßig helles Bild für den Fahrer zu erzeugen, gilt folgendes:
Für dunkle Bereiche soll es bevorzugt keine Abschwächung durch das Filter und für helle Bereiche soll es eine starke Abschwächung durch den Filter 9 geben. Die zwischenliegenden Helligkeitsstufen sollten möglichst kontinuierlich ebenfalls invers abgebildet werden.
Die örtlich unterschiedliche Abschwächung und die möglichst stufenlose Variation des Transmissionsvermögens des Filters 9 ist auf unterschiedliche Weise realisierbar:
Zum einen durch eine örtlich unterschiedliche Aufbringung einer unterschiedlichen Anzahl von Dämpfungsschichten gleicher Transmissivität:
   Eine Dämpfungsschicht weist beispielsweise eine Transmissivität von 95% auf. Werden dann z.B. 5 Schichten übereinander aufgebracht, dann erhält man eine Gesamtdurchlässigkeit von 95% hoch 5 = 77%. Die unterschiedliche Anzahl von Schichten an verschiedenen Orten kann beispielsweise über Masken und mehrmaliges Beschichten realisiert werden.

Zum Anderen durch örtlich unterschiedliche Aufbringung verschiedener Schichten mit unterschiedlicher Transmissivität. So werden nacheinander z.B. Schichten mit Transmissivitäten von 95%, 90%, 85%, ... über mehrere Masken aufgebracht, die nicht überlappen.
Die beiden Verfahren können auch kombiniert werden.

## Patentansprüche

1. Nachtsichtsystem (1) für Kraftfahrzeuge, enthaltend eine Kamera (7) mit einem Bildsensor (11), eingerichtet zum Erfassen von elektromagnetischer Strahlung aus dem sichtbaren (VIS) und Infrarotbereich (NIR), wobei ein Filterelement (9) vorgesehen ist, das derart in dem Strahlengang des Nachtsichtsystems (1) angeordnet ist, dass es eine Abschwächung der erfassten Strahlung bewirkt, die auf vorbestimmte Teilbereiche des Bildsensors abgebildet werden, wobei die Kamera (7) in einem Wellenlängenbereich von 400 bis 1100 nm sensitiv ist, wobei die filterbedingte Abschwächung der Strahlung zumindest den Teil der Bildsensorfläche (11) umfasst, auf den der Nahbereich (20) aus Fahrersicht abgebildet wird wobei der Nahbereich aus Fahrersicht der Bereich unmittelbar vor dem Kraftfahrzeug ist, der aus Sicht des Fahrers mittels Abblendlicht bereits ausreichend einsehbar ist und wobei die Abschwächung für den sichtbaren Bereich von 380nm bis 780nm mit ca. 90% sehr stark ist und die Unterdrückung der Strahlung im Bereich von 780nm bis 1100nm nur ca.4% beträgt, **dadurch gekennzeichnet, dass** das Filterelement (9) eine ortsabhängige Filtercharakteristik aufweist und sich unmittelbar vorder Teilbereich des Bildsensors, auf den der Nahbereich abgebildet wird befindet, so dass die Strahlung aus dem Nahbereich (20) nach der Wellenlängencharakteristik des Filterelements (9) abgeschwächt wird und auf den übrigen Teil der Bildsensorfläche (11) die ungefilterte Strahlung trifft, die vom Fernbereich kommt.

2. Nachtsichtssystem (1) nach Anspruch 1, **dadurch gekennzeichnet, dass** das Filterelement (9) eine wellenlängenabhängige Filtercharakteristik aufweist, wobei diese eine individuell auf die spezielle Verwendung des Systems (1) angepasste Durchlassfunktion aufweist.

3. Nachtsichtsystem (1) nach einem der Ansprüche 1 oder 2, **dadurch gekennzeichnet, dass** das Filterelement (9) auswechselbar befestigt ist.

4. Nachtsichtsystem (1) nach einem der Ansprüche 1 oder 2, **dadurch gekennzeichnet, dass** das Filterelement (9) als Beschichtung (24) auf dem Bildsensor (11) vorgesehen ist.

5. Nachtsichtsystem nach einem der vorstehenden Ansprüche 1 oder 2, wobei das Filterelement (9) als integrierter Teil eines Schutzglases für den Bildsensor (11) ausgebildet ist.

6. Nachtsichtsystem (1) nach einem der Ansprüche 1 bis 5, wobei die Spektren von NIR-Fernlicht und konventionellem Abblendlicht möglichst geringe oder keine Überlappung besitzen.

## Claims

1. Night vision system (1) for motor vehicles, including a camera (7) with an image sensor (11), set up to detect electromagnetic radiation from the visible (VIS) and infrared (NIR) regions, a filter element (9) being provided which is arranged in the beam path of the night vision system (1) in such a way that it effects an attenuation of the detected radiation which is projected onto predetermined subregions of the image sensor, the camera (7) being sensitive in a wavelength region from 400 to 1100 nm, the filter-induced attenuation of the radiation comprising at least the portion of the image sensor surface (11) onto which the near range (20) from the driver's point of view is projected, the near range from the driver's point of view being the region directly in front of the motor vehicle which can already be sufficiently visible from the point of view of the driver by means of dipped beam, and the attenuation being very strong at approximately 90% for the visible region from 380 nm to 780 nm and the suppression of the radiation in the region from 780 nm to 1100 nm being only approximately 4%, **characterized in that** the filter element (9) has a spatially dependent filter characteristic and is located directly in front of the subregion of the image sensor onto which the near range is projected such that the radiation from the near range (20) is attenuated in accordance with the wavelength characteristic of the filter element (9), and the unfiltered radiation which comes from the far range strikes the remaining portion of the image sensor surface (11).

2. Night vision system (1) according to Claim 1, **characterized in that** the filter element (9) has a wavelength-dependent filter characteristic, the latter having a transmission function adapted to this specific use of the system (1).

3. Night vision system (1) according to either of Claims 1 and 2, **characterized in that** the filter element (9) can be exchanged.

4. Night vision system (1) according to either of Claims 1 and 2, **characterized in that** the filter element (9) is provided as a coating (24) on the image sensor (11).

5. Night vision system according to either of Claims 1 and 2, in which the filter element (9) is designed as an integrated part of a protective glass for the image sensor (11).

6. Night vision system (1) according to one of Claims 1 to 5, in which the spectra of NIR main beam and conventional dipped beam overlap as little as possible or not at all.

## Revendications

1. Système (1) de vision nocturne pour véhicules automobiles,
comprenant une caméra (7) dotée d'un détecteur d'image (11) destiné à détecter le rayonnement électromagnétique dans la plage visible (VIS) et la plage infrarouge (NIR),
un élément de filtrage (9) étant prévu et disposé dans le parcours des rayons du système (1) de vision nocturne de manière à entraîner une atténuation du rayonnement détecté sur des parties prédéterminées du détecteur d'image,
la caméra (7) étant sensible dans une plage de longueurs d'onde de 400 à 1 100 nm,
l'atténuation du rayonnement provoquée par le filtrage comprenant au moins la partie de la surface (11) du détecteur d'image sur laquelle l'image de la zone proche (20) vue par le conducteur est formée,
la zone proche vue par le conducteur étant la zone située immédiatement en avant du véhicule automobile, suffisamment éclairée pour le conducteur par la lumière des feux de croisement,
l'atténuation étant très prononcée dans la plage visible qui s'étend de 380 nm à 780 nm, de l'ordre de 90 %, la diminution du rayonnement n'étant que d'environ 4 % dans la plage comprise entre 780 nm et 1 100 nm,
**caractérisé en ce que**
l'élément de filtrage (9) présente une caractéristique de filtrage qui dépend de l'emplacement et est situé immédiatement en avant de la partie du détecteur d'image sur laquelle l'image de la zone proche est formée, de telle sorte que le rayonnement provenant de la zone proche (20) est atténué en fonction de la caractéristique de longueur d'onde de l'élément de filtrage (9) et
**en ce que** le rayonnement non filtré qui provient de la zone éloignée aboutit sur le reste de la surface (11) du détecteur d'image.

2. Système (1) de vision nocturne selon la revendication 1, **caractérisé en ce que** l'élément de filtrage (9) présente une caractéristique de filtrage indépendante de la longueur d'onde et **en ce que** cette caractéristique présente une fonction de passage adaptée individuellement à l'utilisation particulière du système (1).

3. Système (1) de vision nocturne selon l'une des revendications 1 ou 2, **caractérisé en ce que** l'élément de filtrage (9) est fixé de manière à pouvoir être remplacé.

4. Système (1) de vision nocturne selon l'une des revendications 1 ou 2, **caractérisé en ce que** l'élément de filtrage (9) est prévu comme revêtement (24) sur le détecteur d'image (11).

5. Système de vision nocturne selon l'une des revendications 1 ou 2 qui précèdent, dans lequel l'élément de filtrage (9) est configuré comme partie intégrée à un verre de protection du détecteur d'image (11).

6. Système (1) de vision nocturne selon l'une des revendications 1 à 5, dans lequel les spectres de la lumière NIR éloignés et de la lumière classique de feux de croisement se superposent aussi peu que possible ou ne se superposent pas.
